# EUROPEAN PATENT SPECIFICATION

(11) **EP 3 459 354 B1**
(45) Date of publication and mention of the grant of the patent: **27.07.2022**
(21) Application number: 18195798.6
(22) Date of filing: 20.09.2018
(51) Int. Cl.: A23D 9/04, A23G 3/40, A23G 1/36, A23G 9/32

(54) **GLYCERIDE COMPOSITION**
GLYCERIDZUSAMMENSETZUNG
COMPOSITION DE GLYCÉRIDES

(30) Priority: 22.09.2017 BE 201705676
(43) Date of publication of application: 27.03.2019
(73) Proprietor: Fuji Oil Europe, 9042 Gent (BE)
(72) Inventor: CLEENEWERCK, Bernard, 8301 Knokke-Heist (BE); VERBEECK, Sabrina, 9130 Kleldrecht (BE); VANDERLINDEN, Bart, 9800 Deinze (BE)
(74) Representative: Gevers Patents

(56) References cited:
- DE-A1- 3 011 881
- JEYARANI T ET AL: "Trans-free plastic shortenings from coconut stearin and palm stearin blends", FOOD CHEMISTRY, ELSEVIER LTD, NL, vol. 114, no. 1, 1 May 2009 (2009-05-01), pages 270-275, XP025874467, ISSN: 0308-8146, DOI: 10.1016/J.FOODCHEM.2008.09.052 [retrieved on 2008-09-26]
- OI-MING LAI AND CASIMIR C AKOH ED - OI-MING LAI AND CASIMIR C AKOH: "Chapter 30: Palm Oil, Its Fractions, and Components", 1 January 2005 (2005-01-01), HEALTHFUL LI, AOCS PUBLISHING, XP009142766, ISBN: 978-1-893997-51-6 * paragraph [Specialty/ConfectionaryFats]; figure 30.1 *
- TRAITLER H ET AL: "PALM OIL AND PALM KERNEL OIL IN FOOD PRODUCTS", JOURNAL OF THE AMERICAN OIL CHEMISTS' SOCIETY (JAOCS), SPRINGER, DE, vol. 62, no. 2, 1 January 1985 (1985-01-01), pages 417-421, XP000877260, ISSN: 0003-021X, DOI: 10.1007/BF02541414
- SHUKLA V K S: "CONFECTIONERY FATS", DEVELOPMENTS IN OILS AND FATS, XX, XX, 1 January 1995 (1995-01-01), pages 66-94, XP000884792,

## Description

The present invention relates to a glyceride composition which is a full-fledged alternative product for coconut oil and/or hardened coconut oil, but with improved properties, such as fewer contaminants and lower saturation. The present invention also relates to a method for producing said glyceride composition. The present invention further also relates to edible products containing said glyceride composition.

### 1. Background of the invention

Coconut oil is widely used in the food industry. In the confectionery industry, especially, it is popular as a raw material, e.g. for making creams between biscuits, fillings for chocolate products, and the like. Sometimes, the coconut oil is hydrogenated to increase its melting point. Such a form is mainly used in toffees, so-called "coffee whiteners", alternatives for whipped cream, and the like.

Coconut oil is especially preferred in the confectionery industry for its sharp melting profile. This yields a special mouthfeel that is experienced as "cool melting". Due to its typical solid fat profile or SFC-profile (SFC=Solid Fat Content), the fat melts not only quickly, but also completely in the mouth. Fats that do not melt completely at body temperature are sometimes described in the art as "waxy". This mouthfeel is completely absent with coconut oil as well as with hardened coconut oil.

Coconut oil is a lauric fat. Another example of a lauric fat is palm kernel oil. They are characterized by a high lauric acid content. According to the Codex Alimentarius, the lauric acid or C12:0 - fatty acid content in coconut oil is 45,1 to 55,0 %. Further fatty acids present are mainly caprylic acid (C8:0), capric acid (C10:0), myristic acid (C14:0), palmitic acid (C16:0) and oleic acid (C18:1). Coconut oil is highly saturated (ca. 91%), which is a disadvantage.

Certain applications require coconut oil to be fully hardened through, resulting in ca. 100% saturation.

Another disadvantage of coconut oil are the contaminants found in it. Particularly well-known are the so-called PAHs (poly-aromatic hydrocarbons) which develop upon drying coconut flakes. These contaminants are mainly present in oil pressed from the dried coconut flakes.

Another contaminant that has recently received more and more attention is the presence of traces of mineral oil. Recent studies have shown that coconut oil can be a critical ingredient in this regard. Until today, the causes are still largely unclear.

In the art, a distinction is made between aromatic and nonaromatic hydrocarbons originating from mineral oil. They are usually called MOAH (Mineral Oil Aromatic Hydrocarbons) and MOSH (Mineral Oil Saturated Hydrocarbons). Thus, MOAH (mineral oil aromatic hydrocarbons) are (unsaturated) aromatic hydrocarbons originating from mineral oil. Likewise, MOSH (mineral oil saturated hydrocarbons) are saturated hydrocarbons from mineral oil. The chain length of these molecules mainly ranges between C10 and C50 carbon atoms.

The toxicity is the subject of several ongoing studies, but MOAH receive the most attention in this context.

Accurate methods have been developed for the removal of PAHs from vegetable oil by contacting the oil with activated carbon.

However, the removal of traces of mineral oil proves to be much more difficult. Vegetable oils are usually bleached during the refining process by contacting them with a specific adsorbant, Fuller's earth, to which activated carbon can also be added, e.g. for the removal of PAHs. This is followed by a deodorization step in which the oil, at a high temperature (usually 200 to 260°C) and a deep vacuum (e.g. 1 to 3 mbar), is contacted with stripping steam, for a length of time sufficient for removing free fatty acids, unwanted odor and taste components, and volatile contaminants such as pesticides.

Regarding the removal of MOSH and MOAH, it has been found that the bleaching step has little to no effect and that the deodorization step only has a positive effect on the removal of MOSH and MOAH with a short chain, more in particular a chain length shorter than C24 carbon atoms.

A possible approach for the removal of MOSH and MOAH from coconut oil could be fractioning said coconut oil, e.g. by means of dry fractioning or solvent fractioning. The hard fraction (i.e. the stearin fraction) could then be used. The disadvantage of such an operation is that it leads to very expensive products, due to the high costs of raw materials, low yields and a byproduct, in this case the olein. Furthermore, this olein is then even more highly contaminated, limiting its range of application, e.g. the technical sector. Moreover, the stearin is very highly saturated.

In view of the above, there is a need for an alternative glyceride composition to coconut oil and/or to hardened coconut oil, having the positive property of cool and complete melting in the mouth, but a much reduced presence of the negative properties, wherein said alternative glyceride composition should, in particular, be much less affected by mineral oil contamination, and wherein the alternative is preferably less saturated as well. Furthermore, there is a need for a method for producing and using said alternative glyceride composition.

### 2. Summary of the invention

The inventors have now surprisingly found that it is possible to obtain a glyceride composition which fulfills the above-mentioned needs and is thus a full-fledged coconut alternative.

It is therefore an object of the present invention to provide a glyceride composition comprising at least one stearin fraction of a lauric fat component and at least one fractioned non-lauric fat component, wherein the glyceride composition contains, relative to the weight of the glyceride composition,
a) C16 saturated fatty acid residues (C16:0), C18 saturated fatty acid residues (C18:0) and C12 saturated fatty acid residues (C12:0) in a weight ratio of (C16:0 + C18:0) / (C12:0) of more than 0.7,
b) triglycerides having a total chain length, expressed in carbon number, of respectively 42 carbon atoms (C42), 44 carbon atoms (C44) and 46 carbon atoms (C46), wherein the sum C42 + C44 + C46 is less than 20,
c) 60 to 85 wt. % of saturated fatty acid residues (SAFA),
d) less than 18 ppm of saturated hydrocarbons originating from mineral oil with a chain length of more than ten carbon atoms (>C10) and equal to or less than 50 carbon atoms (≤ C50) (hereafter MOSH content),
   wherein the glyceride composition has
e) a solid fat content (SFC) at 35°C of less than 5 wt. % and an SFC at 40°C of less than 1 wt. % wherein the SFC value is measured according to the standard IUPAC (International Union of Pure and Applied Chemistry) 2.150 a method.

It is a further object of the present invention to provide a method for the production of said glyceride compositions.

It is also an object of the present invention to provide an edible product containing said glyceride composition.

### 3. Detailed description of the invention

Within the scope of the present invention, it is understood that the term "coconut alternative" refers to an alternative for coconut oil and/or hardened coconut oil and/or transesterified coconut oil.

Within the scope of the present invention, the term "fat" is used both for liquid oil and for semi-solid or solid fat.

The inventors have now surprisingly found that it is the specific combination of at least one stearin fraction of a lauric fat component with at least one fractioned non-lauric fat component that makes the formed glyceride composition, as described above, a good coconut alternative, and additionally yields a substantial reduction of het saturated fat content (SAFA) and of the contamination level of MOSH and/or MOAH.

Lauric and non-lauric fats are seldom combined with each other, as they are incompatible. A known example of this is the limitation imposed in recipes containing lauric fats and cocoa butter. Examples and reasons for such limitation are described in: Ol-Ming Lai and Akoh, C, (2005), Palm Oil, Its Fractions, and Components, Healthful Lipids, AOCS Publishing; Traitler, H. and Dieffenbacher, A., (1985), Palm oil and Palm kernel oil in food products, JAOCS, 62:2, 417-421; and in Shukla V.K.S., (1995), Confectionary fats, Developments in Oils and Fats, 66-94*.* Only lean cocoa powder with a cocoa butter content of only 10 - 12 % is combined with lauric fats, due to its strong eutectic effect. Cocoa butter is a fat that is very rich in so-called symmetric triglycerides, to the amount of 75 - 80 wt. %. These symmetric triglycerides are also called SUS-type, wherein S stands for saturated and U stands for unsaturated. The location of the unsaturated fatty acid in the middle position is common in nature.

Only two types of exceptions are known in the state of the art wherein lauric and non-lauric fats are combined with each other. In one case, it concerns transesterified combinations of lauric and non-lauric fats, and the other is a specific combination in which lauric fractions, usually palm kernel stearin, are combined with non-lauric stearin fractions, usually palm stearin. Thus, in the first case, lauric and non-lauric combinations of fats are transesterified after being mixed. This transesterification results in a so-called randomization, wherein the fatty acids are combined at random with each other to turn them into new triglycerides. It was found that such fat compositions have a stabilizing effect on blooming. Blooming is the phenomenon where chocolate products turn white after a certain storage time, particularly at higher temperatures. The anti-blooming effect is mainly attributed to the triglycerides formed during transesterification, so-called mixed triglycerides. These triglycerides contain both shorter and longer fatty acids, respectively from the lauric and non-lauric fats. These mixed triglycerides are characterized by a carbon number (CN) mainly having a length between 42 carbon atoms (C42) and 46 carbon atoms (C46).

These chain lengths are only present to a limited extent in the raw materials before transesterification.

Such compositions have for example been described in EP 0 521 549 A1, where a hardstock with an anti-blooming effect is described, consisting of a transesterified combination of hardened-through palm and hardened-through palm kernel oil.

GB 1 382 573 also describes such combinations, wherein the hardening process can take place both before and after transesterification. Here, coconut oil, palm kernel oil and babassu oil are for instance used as lauric raw materials. The non-lauric products are based on palm and palm fractions. The fat is typically used in a biscuit cream.

In US 4,208,445, harder transesterified combinations of lauric and non-lauric fats are described, which are suitable for use in couvertures and toffees. The products are hardened after transesterification. The non-lauric component consists of palm fat or cottonseed oil.

In EP 1 893 732, transesterified combinations of lauric and non-lauric fats are also described, wherein no use is made of hardened fats, but fractioned fats are used, more in particular palm kernel stearin and palm stearin. These combinations allow final compositions to be produced with a relatively sharp melting profile, which are, among other things, suitable for use in couvertures. The products also show an improved resistance to blooming.

The latter case thus concerns a specific combination in which lauric fractions, usually palm kernel stearin, are combined with non-lauric stearin fractions, usually palm stearin. Palm stearin is a fraction of palm oil which is very rich in so-called trisaturated triglycerides (SSS triglycerides), also called S3-type. Contrary to SUS-triglycerides, these SSS triglycerides do show a good compatibility with lauric fats, and they are precisely used to confer a better heat resistance to lauric fats. These combinations are for example described in EP 0 532 086 A1 and WO 2006/029139 A1 A1, and Jeyarani et Al, "Trans-free plastic shortenings from coconut stearin and palm stearin blends" (Food Chemistry, 114, no 1, pg 270-275). The latter publication clearly shows that such product combinations lead to solid fat contents at 35 °C and 40°C, that are substantially higher than the required solid fat content (SFC) of less than 5 wt. % at 35°C and of less than 1 wt. % at 40°C. The effect of such a difference is further demonstrated in a comparative example.

The disadvantage of these state of the art combinations as described above, wherein lauric and non-lauric fats are combined with each other, is that they do not combine the properties of the cool melting profile of coconut oil with a substantial reduction of het saturated fat content (SAFA) and a substantial reduction of the contamination level of MOSH and/or MOAH.

In the glyceride composition according to the present invention, as described above, the specification requires that the weight ratio of (C16:0 + C18:0) / (C12:0) is more than 0.7, preferably more than 0.8, more preferably more than 0.9, and most preferably more than 1.0.

Within the scope of the present invention, it is understood that C12:0, C16:0 and C18:0 designate saturated fatty acid residues with respective chain lengths of 12, 16 or 18 carbon atoms.

In the glyceride composition according to the present invention, as described above, the specification requires that the sum C42 + C44 + C46 is less than 20, preferably less than 15 and more preferably less than 10, relative to the weight of the glyceride composition. This is important for obtaining the proper mouthfeel. Triglycerides with a chain length of C42, C44 and C46 are, to a certain extent, present in lauric stearin fractions, but substantially absent in fractions of non-lauric fats. When both of these fats are transesterified, this fraction is considerably increased.

In the glyceride composition according to the present invention, as described above, the specification requires that the SAFA content is from 60 to 85 wt. %, preferably from 65 and 80 wt. % which causes the glyceride composition to be a healthier alternative for coconut oil or hardened-through coconut oil.

In the glyceride composition according to the present invention, as described above, the specification requires that the MOSH content, being the content of saturated hydrocarbons originating from mineral oil with a chain length of more than ten carbon atoms (>C10) and equal to or less than 50 carbon atoms (≤ C50), is less than 18 ppm, preferably less than 15 ppm, more preferably less than 12 ppm, and most preferably less than 10 ppm, relative to the weight of the glyceride composition.

In the glyceride composition according to the present invention, as described above, the specification requires that the solid fat content (SFC) at 35°C is less than 5 wt. %, preferably less than 3 wt. %, more preferably less than 1 wt. %, and also requires that the SFC at 40°C is less than 1 wt. %, wherein the SFC value is measured according to the standard IUPAC (International Union of Pure and Applied Chemistry) 2.150 a method.

According to a preferred embodiment, the glyceride composition according to the present invention is further characterized by a specific solid fat content (SFC) profile in which the difference between SFC at 20°C (SFC 20°C) and at 30°C (SFC 30°C), i.e. SFC 20°C - SFC 30°C, is at least 30 wt. %, preferably at least 35 wt. %, more preferably 40 wt. %. A sharp transition from solid to liquid results in a cool melting feel in the mouth.

According to a preferred embodiment, the glyceride composition according to the present invention contains saturated fatty acid residues with respective chain lengths of 12 carbon atoms (C12:0) in an amount between 18 and 40 wt. %, preferably between 20 and 37 wt. %, relative to the weight of the glyceride composition.

According to a preferred embodiment, the glyceride composition according to the present invention is characterized by an MOAH content, being the content of (unsaturated) aromatic hydrocarbons originating from mineral oil with a chain length of more than ten carbon atoms (>C10) and equal to or less than 50 carbon atoms (≤ C50), which is less than 2.5 ppm, preferably less than 2.0 ppm, more preferably less than 1.5 ppm, and most preferably less than 1.0 ppm, relative to the weight of the glyceride composition.

As said above, several studies concerned with the toxicity of MOAH are still ongoing, but it is already known that from a toxicity point of view, MOAH are more suspicious than MOSH. The inventors have now found that the glyceride composition of the present invention is a full-fledged coconut alternative with a drastic improvement when it comes to MOAH, as shown in the examples described below. MOAH contents range to below the detection limit of 1 ppm.

The content of MOSH and MOAH can be determined using analytic methods known in the state of the art. Preferably, the LC-GC-FID technique according to the German BfR (Bundesinstitut für Risikobewertung) described standard method (2012), known in the art, is used.

According to a preferred embodiment, the glyceride composition according to the present invention is characterized by a 3-monochloropropane-1,2-diol content (i.e. 3-MCPD content) of less than 1.0 ppm, preferably less than 0.8 ppm, more preferably less than 0.7 ppm, relative to the weight of the glyceride composition. 3-MCPD is a so-called process contaminant that may be formed during refining of a fat or a fat mixture. Palm oil and derived fractions are particularly susceptible to this, as the presence of the precursors is higher in this oil.

According to a preferred embodiment, the glyceride composition contains, relative to the weight of the glyceride composition
a) 30 to 70 wt. % of at least one stearin fraction of a lauric fat component, preferably from 35 to 65 wt. %, more preferably from 40 to 60 wt. %, and
b) 70 to 30 wt. % of at least one fractioned non-lauric fat component, preferably from 65 to 35 wt. %, more preferably from 60 to 40 wt. %.

According to a preferred embodiment, the glyceride composition according to the present invention comprises at least 10 wt. %, preferably at least 20 wt. %, relative to the weight of the glyceride composition, of at least one fractioned non-lauric fat wherein said fractioned non-lauric fat component is characterized by an amount of SSS triglycerides (i.e. S3 content) of at most 10 wt. %, preferably at most 8 wt. %, more preferably at most 5 wt. %, based on the total weight of the triglyceride composition of said fractioned non-lauric fat component. More preferably, this fractioned non-lauric fat component is further characterized by an amount of S2U triglycerides (i.e. S2U content) of at least 60 wt. %, preferably between 70 and 95 wt. %.

Examples of fractioned non-lauric fats are fractioned palm fat, fractioned shea butter, fractioned mango fat or fractioned sal fat. Typically, a fractioned palm fat will be used, due to its wide availability. The palm fat may be a single fraction or a fraction obtained by multistep fractionation. The fractioned palm fraction is preferably a mid fraction (PMF = Palm Mid Fraction), being a fraction obtained by removing at least one olein fraction and removing at least one stearin fraction. The fractioning can be performed dry or by means of a solvent.

Examples of lauric fats are palm kernel oil, coconut oil, babassu oil or a combination of several of these, wherein the use of palm kernel oil, being easily fractionable, is preferred.

If required, the glyceride composition according to the present invention further comprises at least one liquid oil in a limited amount of less than 20 wt. %, relative to the weight of the glyceride composition, intended to lower the SAFA content, while only slightly affecting the organoleptic properties.

Examples of such liquid oils are sunflower oil with high oleic acid content, soy oil, rapeseed oil with high oleic acid content, or traditional sunflower oil or rapeseed oil, or combinations thereof.

According to a further preferred embodiment, the glyceride composition according to the present invention preferably comprises substantially no hardened fat components.

According to a further preferred embodiment, the glyceride composition according to the present invention preferably comprises substantially no transesterified fat components.

Fats without hardening or transesterification offer the advantage of not being considered modified. In some cases, however, the presence of a limited amount of transesterified fat can also offer advantages. Certain combinations of fats in certain storage conditions, when used in fillings or creams, cause a light recrystallization at the surface, which manifests itself in the form of small fat crystals that appear over time. The presence in the recipe of nut paste, such as e.g. hazelnut paste, can sometimes increase the susceptibility to recrystallization. For such combinations, it can be an advantage to add a certain amount of transesterified fat to the glyceride composition. However, the condition remains that the resulting product combination should retain a cool melting profile.

According to a further preferred embodiment, the glyceride composition according to the present invention therefore comprises, relative to the weight of the glyceride composition, at least 5 wt. % and at most 25 wt. %, preferably between 8 and 20 wt. %, of a transesterified fat component, wherein optionally this fat component is fractioned after transesterification.

Preferably, this transesterified fat component comprises at least 80 wt. %, more preferably at least 90 wt. % of non-lauric fats, more preferably consists for 100 wt. %, of non-lauric fats, preferably selected from the group of palm oil, shea butter, sal fat or mango fat or fractions of these fats or combinations of these fats. Preferably, however, use will be made of palm oil or a palm oil fraction that is transesterified, and which can be optionally fractionated again, so as to obtain a sharper SFC profile. This can contribute to the cool melting character of the glyceride composition. Combinations of the above fats may also be used, either transesterified together or mixed afterwards, after individual transesterification.

The inventors have found that the glyceride composition according to the present invention is characterized by a good cooling and complete melting in the mouth, combined with a strong reduction of mineral oil contamination and of saturated fat content.

The present invention also provides a method for producing the glyceride composition of the present invention.

For producing the glyceride composition of the present invention, several methods may adequately be used. The method for producing the glyceride composition described above preferably comprises the steps of mixing:
a) 30 to 70 wt. %, preferably from 35 to 65 wt. %, more preferably from 40 to 60 wt. %, of at least one stearin fraction of a lauric fat component, which is preferably at least partly in molten form, and
b) 70 to 30 wt. %, preferably from 65 to 35 wt. %, more preferably from 60 to 40 wt. %, of at least one fractioned non-lauric fat component, as described above, which is preferably at least partly in molten form, and
c) optionally less than 20 wt. %, of at least one liquid oil, as described above.

Preferably, the at least one stearin fraction of a lauric fat component and at least one fractioned non-lauric fat component is completely or nearly completely melted before mixing so that these fat components exhibit a good miscibility.

If the glyceride composition comprises transesterified fat components, then the method for producing such glyceride composition preferably comprises the steps of mixing:
a) 30 to 70 wt. %, preferably from 35 to 65 wt. %, more preferably from 40 to 60 wt. %, of at least one stearin fraction of a lauric fat component, which is preferably at least partly in molten form, and
b) 70 to 30 wt. %, preferably from 65 to 35 wt. %, more preferably from 60 to 40 wt. %, of at least one fractioned non-lauric fat component, which is preferably at least partly in molten form, and
c) 5 to 25 wt. %, preferably from 8 to 20 wt. %, of at least one transesterified fat component.

The present invention also provides the use of the glyceride composition of the present invention, as described above, for the production of edible products selected from the group consisting of pastry fillings, pastry creams, whitener products, couvertures, toffees, ice cream, and whipped cream.

Within the scope of the present invention, it is understood that a whitener product, preferably in powder form, is a product used with coffee to give it a whiter appearance, fairly comparable to the effect of adding cow's milk to coffee.

Within the scope of the present invention, it is also understood that whipped cream also comprises products that are not 100% dairy products, but also contain non-dairy ingredients, such as vegetable oils and fats.

Such edible products are also an object of the present invention.

The edible products of the present invention, relative to the total weight of the edible products, comprise
a) 15 to 95 wt. % of the glyceride composition of the present invention, as described above, preferably from 20 to 60 wt. %, more preferably from 25 to 50 wt. %, and
b) 5 to 85 wt. % of a dry matter, preferably from 40 to 80 wt. %, more preferably from 50 to 75 wt. %,
c) at most 25 wt. % water, preferably at most 15 wt. %, more preferably at most 8 wt. %.

Within the scope of the present invention, it is also understood that the term "dry matter" refers to the fat-free portion comprised in the at least one filler.

Within the scope of the present invention, it is also understood that oils or fats comprised in the at least one filler, as described above, are a part of the glyceride composition described above. If, for example, cocoa mass or nut paste is used as a filler, then the fat portion will be considered as a part of the glyceride composition comprised in the edible product of the present invention and the fat-free portion will be considered as the dry filler comprised in the edible product of the present invention.

Within the scope of the present invention, it is also understood that the filler is an ingredient that is purposely added to the edible product according to the present invention.

Examples of such fillers or filling materials are sugar, flour, milk components, such as skimmed milk powder and whole milk powder, whey powder, cheese components, meat components, starch, cocoa components, such as cocoa powder and cocoa mass, coffee powder, food grade solid organic and inorganic powders, nut paste, sunflower seed paste, stevia, maltitol, erythritol, inulin, oligofructose, pectin, maltodextrin, spices.

The present invention will be further elucidated by the examples and comparative examples below.

### 4. Examples

Al mixing ratios, contents and concentrations herein are given in weight units and weight percentage, unless specified otherwise.

### Reference fat composition (REF 1): coconut oil

REF 1 is a standard refined coconut oil, as commercially available on the market. The characteristics of REF 1, specifically the fatty acid residue concentrations, the carbon number and the solid fat content (SFC), are shown in Table 1 below.

### Example 1: Production of an alternative fat composition (fat mixture 1) for producing a pastry filling

A fat mixture 1 was prepared as an alternative to coconut oil by mixing 40 wt. % palm kernel stearin with iodine number 7 and 60 wt. % of a palm mid fraction (PMF) with an iodine number of 43 (melting point of 27.3 °C).

The characteristics of the fat mixture 1, specifically the fatty acid residue concentrations, the carbon number and the solid fat content (SFC), are shown in Table 1 below.

**Table 1**

| *Fatty acid residue concentrations (wt. %)* | | |
|---|---|---|
| | **REF 1** | **Fat mixture 1** |
| C8:0 | 6.7 | 0.7 |
| C10:0 | 5.5 | 1.1 |
| C12:0 | 46.4 | 22.2 |
| C14:0 | 19.0 | 9.3 |
| C16:0 | 9.9 | 33.4 |
| C18:0 | 3.1 | 3.7 |
| C18:1 | 7.0 | 24.3 |
| C18:2 | 1.6 | 4.1 |
| C18:3 | 0.0 | 0.2 |
| C20:0 | 0.1 | 0.3 |
| (C16+C18)/C12 | 0.3 | 1.7 |
| SAFA | 91.2 | 70.8 |

| *Carbon number (wt. %)* | | |
|---|---|---|
| C42 | 8.4 | 3.6 |
| C44 | 4.7 | 1.8 |
| C46 | 2.6 | 1.1 |
| C42 + C44 + C46 | 15.7 | 6.5 |
| SFC 10°C | 78 | 78.6 |

| *Solid fat content (SFC), %* | | |
|---|---|---|
| SFC 20°C | 39 | 31.2 |
| SFC 25°C | 3 | 7.8 |
| SFC 30°C | 0 | 0 |
| SFC 35°C | 0 | 0 |

Both fat mixtures (REF 1 and Fat mixture 1) were analyzed for the presence of MOSH and MOAH. The results are summarized in Table 2. The method used is the LC-GC-FID technique according to the Bfr method (2012).

**Table 2**

| *MOSH concentrations (ppm)* | | |
|---|---|---|
| | **REF 1^{a}** | **Fat mixture 1^{a}** |
| >C10 and <= C24 | <1 | <1 |
| >C24 and <= C35 | 14.0 | 3.9 |
| >C35 and <= C50 | 20.0 | 7.4 |

| *MOAH concentrations (ppm)* | | |
|---|---|---|
| >C10 and <= C24 | <1 | <1 |
| >C24 and <= C35 | 1.9 | <1 |
| >C35 and <= C50 | 3.8 | <1 |

| | | |
|---|---|---|
| ^{a}The lower detection limit for the different class is 1 ppm. | | |

Thus, in the developed alternative fat mixture 1, we can see values for MOSH that are three times lower than for REF 1, while no detectable amounts are present for MOAH.

### Comparative example 2: Production of a pastry filling

A pastry filling was prepared with fat mixture REF 1, wherein the following recipe was used (Table 3):

**Table 3**

| | |
|---|---|
| Sugar | 46.9% |
| Fat mixture | 38.4% |
| Cocoa powder 10/12 | 9.9% |
| Skimmed milk powder | 4.3% |
| Lecithin | 0.4% |
| Vanillin | 0.1% |

The pastry filling was prepared in the following manner:
The dry ingredients were mixed together with part of the fat mixture in a Kenwood mixer with K-beater. The obtained pasty mass was then ground on a 5-roll grinder to a particle size of 25 µm. Then, the ground powder was introduced into a Collette Conche and kneaded for an hour at 70°C (dry conching). Finally, the remaining fat mixture, together with the lecithin, was added and the whole was mixed through for another 10 minutes (wet conching).
The product thus obtained was filled into 10g aluminum cups and cooled. Storage was at 20°C up to the time of evaluation.

### Example 3: Production of a pastry filling

A pastry filling was prepared with the fat mixture 1, wherein the recipe of Table 3 was used.
The preparation of the filling was performed in the same manner as for comparative example 2.

The pastry fillings of Comparative example 2 and example 3 were judged after 1 month by a tasting panel consisting of 8 test subjects. Scores were attributed to various parameters, between the numbers 0.0 and 5.0, the averaged results are shown in Table 4.

**Table 4**

| *Taste evaluation of the pastry fillings* | | |
|---|---|---|
| | **Comparative example 2** | **Example 3** |
| Grainy | 0.0 | 0.0 |
| Creamy | 3.5 | 3.3 |
| Readily melting | 4.3 | 4.0 |
| Cool melting | 2.8 | 2.1 |
| Hardness | 2.4 | 2.7 |
| Stickiness | 0.0 | 0.0 |
| Waxiness | 0.0 | 0.0 |
| Proximity to Reference (0 = far ; 5 = very close) | | 3.9 |

As a conclusion of this test, it can be stated that a fat mixture (i.e. fat mixture 1) was developed which is close in organoleptic properties to the reference coconut oil (REF1), with as additional advantages a noticeable decrease in SAFA content and especially a substantial reduction in the level of mineral oil contamination.

### Reference fat composition (REF 2): hardened-through coconut oil

The hardened-through coconut oil was obtained by hardening through a commercially available refined coconut oil, and followed by refining it again. The characteristics of REF 2, specifically the fatty acid residue concentrations, the carbon number and the solid fat content (SFC), are shown in Table 5 below.

### Example 4: Production of a fat composition (fat mixture 2) for producing a pastry filling

A fat mixture 2 was prepared as an alternative to hardened-through coconut oil by mixing 56 wt. % palm kernel stearin with iodine number 7, 40 wt. % of a palm mid fraction (PMF) with an iodine number of 43 (melting point at 27.3 °C) and 4 wt. % of a palm stearin with iodine number 11.

The characteristics of the fat mixture 2, specifically the fatty acid residue concentrations, the carbon number and the solid fat content (SFC), are shown in Table 5 below.

**Table 5**

| *Fatty acid residue concentrations (wt. %)* | | |
|---|---|---|
| | **REF 2** | **Fat mixture 2** |
| C8:0 | 6.6 | 1.0 |
| C10:0 | 5.6 | 1.5 |
| C12:0 | 46.6 | 31.0 |
| C14:0 | 18.6 | 12.7 |
| C16:0 | 9.9 | 28.1 |
| C18:0 | 11.2 | 3.2 |
| C18:1 | 0.7 | 18.4 |
| C18:2 | 0.1 | 3.1 |
| C18:3 | 0.0 | 0.0 |
| C20:0 | 0.0 | 0.2 |
| (C16+C18)/C12 | 0.5 | 1.0 |
| SAFA | 99.2 | 77.9 |

| *Carbon number (wt. %)* | | |
|---|---|---|
| C42 | 7.6 | 5.1 |
| C44 | 4.2 | 2.5 |
| C46 | 2.4 | 1.5 |
| C42 + C44 + C46 | 14.2 | 9.1 |

| *Solid fat content (SFC), %* | | |
|---|---|---|
| SFC 10°C | 89.6 | 81.6 |
| SFC 20°C | 59.0 | 53.1 |
| SFC 25°C | 20.8 | 26.4 |
| SFC 30°C | 4.4 | 1.2 |
| SFC 35°C | 1.8 | 0 |

Both fat mixtures (REF 2 and Fat mixture 2) were analyzed for the presence of MOSH and MOAH. The results are summarized in Table 6. The method used is the LC-GC-FID technique according to the Bfr method (2012).

**Table 6**

| *MOSH concentrations (ppm)* | | |
|---|---|---|
| | **REF 2^{a}** | **Fat mixture 2^{a}** |
| >C10 and <= C24 | <1 | <1 |
| >C24 and <= C35 | 8.4 | 2.7 |
| >C35 and <= C50 | 12.0 | 6.1 |

| *MOAH concentrations (ppm)* | | |
|---|---|---|
| >C10 and <= C24 | <1 | <1 |
| >C24 and <= C35 | <1 | <1 |
| >C35 and <= C50 | 2.2 | <1 |

| | | |
|---|---|---|
| ^{a}The lower detection limit for the different class is 1 ppm. | | |

Thus, in the developed alternative fat mixture 2, we can see values for MOSH that are half as low as for REF 2, while no detectable amounts are present for MOAH.

### Comparative example 5: Production of a pastry filling

A pastry filling was prepared with fat mixture REF 2, wherein the same recipe was used from Table 3, as described above.

The preparation of the filling was performed in the same manner as for comparative example 2.

### Example 6: Production of a pastry filling

A pastry filling was prepared with the fat mixture 2, wherein the same recipe was used from Table 3, as described above.

The preparation of the filling was performed in the same manner as for comparative example 2.

The pastry fillings of Comparative example 5 and example 6 were judged after 1 month by a tasting panel consisting of 8 test subjects. Scores were attributed to various parameters, between the numbers 0.0 and 5.0, the averaged results are shown in Table 7.

**Table 7**

| *Taste evaluation of the pastry fillings* | | |
|---|---|---|
| | **Comparative example 5** | **Example 6** |
| Grainy | 0.0 | 0.0 |
| Creamy | 2.4 | 2.8 |
| Readily melting | 3.8 | 3.1 |
| Cool melting | 1.9 | 1.3 |
| Hardness | 3.3 | 3.1 |
| Stickiness | 0.1 | 0.1 |
| Waxiness | 0.0 | 0.1 |
| Proximity to Reference (0 = far ; 5 = very close) | | 3.5 |

As a conclusion of this test, it can be stated that a fat mixture (i.e. fat mixture 2) was developed which is close in organoleptic properties to the reference hardened-through coconut oil (REF 2), with as additional advantages a noticeable decrease in SAFA content and especially a substantial reduction in the level of mineral oil contamination.

### Example 7: Production of the fat mixture 3, the reference fat composition 3 (REF 3) and the fat mixture 4 for producing a pastry filling

A fat mixture 3 was prepared by mixing 60 wt. % palm kernel stearin with iodine number 7 and 40 wt. % palm mid fraction with iodine number 43 (melting point at 27.3°C).

Reference fat composition 3 (REF 3) was prepared by mixing 60 wt. % palm kernel stearin with iodine number 7 and 40 wt. % palm stearin with iodine number 25.

Fat mixture 4 was prepared by mixing 60 wt. % palm kernel stearin with iodine number 7, 30 wt. % palm mid fraction with iodine number 43 and 10 wt. % of a random transesterified palm oil. The latter fat component was prepared by chemical transesterification of palm oil using 0.1% sodium methylate as a catalyst, followed by refining the sample. As this fat component was not fractioned, it has a less sharp melting profile than the other two fat components.

The characteristics of the fat mixtures 3, 4 and REF 3, specifically the fatty acid residue concentrations, the carbon number and the solid fat content (SFC), are shown in Table 8 below. The characteristics of REF 2, specifically the fatty acid residue concentrations, the carbon number and the solid fat content (SFC) are also shown again in Table 8 below.

**Table 8**

| *Fatty acid residue concentrations (wt. %)* | | | | |
|---|---|---|---|---|
| | **REF 2** | **Fat mixture 3** | **REF 3** | **Fat mixture 4** |
| C8:0 | 6.6 | 1.2 | 1.2 | 1.2 |
| C10:0 | 5.6 | 1.7 | 1.7 | 1.6 |
| C12:0 | 46.6 | 32.1 | 32.2 | 32.0 |
| C14:0 | 18.6 | 13.1 | 13.2 | 13.1 |
| C16:0 | 9.9 | 25.5 | 32.5 | 24.9 |
| C18:0 | 11.2 | 3.2 | 3.4 | 3.2 |
| C18:1 | 0.7 | 19.2 | 13.1 | 19.5 |
| C18:2 | 0.1 | 3.5 | 2.1 | 3.8 |
| C18:3 | 0.0 | 0.1 | 0.0 | 0.1 |
| C20:0 | 0.0 | 0.2 | 0.2 | 0.2 |
| (C16+C18)/C12 | 0.5 | 0.9 | 1.1 | 0.9 |
| SAFA | 99.2 | 77.2 | 84.7 | 76.5 |

| *Carbon number (wt.* %) | | | | |
|---|---|---|---|---|
| C42 | 7.6 | 6.1 | 5.9 | 6.1 |
| C44 | 4.2 | 3.4 | 3.4 | 3.4 |
| C46 | 2.4 | 2.3 | 3.2 | 2.4 |
| C42 + C44 + C46 | 14.2 | 11.8 | 12.5 | 11.9 |

| *Solid fat content (SFC), %* | | | | |
|---|---|---|---|---|
| SFC 10°C | 89.6 | 77.2 | 85.6 | 78.5 |
| SFC 20°C | 59.0 | 47.4 | 72.6 | 50.1 |
| SFC 25°C | 20.8 | 20.8 | 50.9 | 24.2 |
| SFC 30°C | 4.4 | 0.0 | 23.1 | 0.8 |
| SFC 35°C | 1.8 | 0.0 | 12.5 | 0.1 |
| SFC 40°C | 0.0 | 0.0 | 7.8 | 0.0 |

Thus, the reference fat composition (REF 2) is the hardened-through coconut oil, which is cool melting and for which an alternative is sought according to the invention described herein, due to the high content of mineral oil in this hardened-through coconut oil. Fat mixture 3, according to the present invention, is based only on palm kernel stearin and palm mid fraction (PMF), without the use of palm stearin. The reference fat composition (REF 3), on the other hand, is a combination of palm kernel stearin and palm stearin, a combination known from the literature, and thus not according to the invention, also characterized by higher SFC values at 35 °C and 40 °C and a relatively higher SAFA content with regard to fat mixtures 3 and 4. Fat mixture 4 is a combination of palm kernel stearin and palm mid fraction, to which a limited amount of transesterified palm oil was added, namely 10%.

Both fat mixtures 3 and 4, which are according to the invention, were analyzed for the presence of MOSH and MOAH. The results are summarized in Table 9. The method used is the LC-GC-FID technique according to the Bfr method (2012). For comparison, the results of REF2 are also shown in Table 9.

**Table 9**

| *MOSH concentrations (ppm)* | | | |
|---|---|---|---|
| | **REF 2^{a}** | **Fat mixture 3^{a}** | **Fat mixture 4^{a}** |
| >C10 and <= C24 | <1 | < 1 | < 1 |
| >C24 and <= C35 | 8.4 | 4,4 | 4,1 |
| >C35 and <= C50 | 12.0 | 6.2 | 6.3 |

| *MOAH concentrations (ppm)* | | | |
|---|---|---|---|
| >C10 and <= C24 | <1 | < 1 | < 1 |
| >C24 and <= C35 | <1 | < 1 | < 1 |
| >C35 and <= C50 | 2.2 | < 1 | < 1 |

| | | | |
|---|---|---|---|
| ^{a}The lower detection limit for the different class is 1 ppm. | | | |

### Comparative example 8: Production of a pastry filling

A pastry filling was prepared with fat mixture REF 2, wherein the following recipe was used (Table 10):

**Table 10**

| | |
|---|---|
| Sugar | 39.00% |
| Fat | 35.00% |
| Cocoa powder 10/12 | 10.00% |
| Skimmed milk powder | 10.00% |
| Hazel nut paste | 6.00% |
| Lecithin | 0.40% |
| Vanillin | 0.05% |

Thus, contrary to the recipes from previous examples, a recipe was chosen here in which hazelnut paste is also present as an ingredient. About half of the latter is liquid oil. Hazelnut paste confers a typical nutty taste and a creamy mouthfeel to the filling, but it can sometimes also increase the risk of recrystallization.

The pastry filling was prepared in the following manner:
The dry ingredients were mixed together with part of the fat mixture in a Kenwood mixer with K-beater. The obtained pasty mass was then ground on a 5-roll grinder to a particle size of 25 µm. Then, the ground powder was introduced into a Collette Conche and kneaded for an hour at 70°C (dry conching). Finally, the remaining fat mixture, together with the lecithin, was added and the whole was mixed through for another 10 minutes (wet conching).
The product thus obtained was filled into 10g aluminum cups and cooled. Storage was at 20°C up to the time of evaluation.

### Example 9: Production of a pastry filling

A pastry filling was prepared with the fat mixture 3, wherein the same recipe was used from Table 10, as described above.

The preparation of the filling was performed in the same manner as for comparative example 8.

### Comparative example 10: Production of a pastry filling

A pastry filling was prepared with fat mixture REF 3, wherein the same recipe was used from Table 10, as described above.

The preparation of the filling was performed in the same manner as for comparative example 8.

### Example 11: Production of a pastry filling

A pastry filling was prepared with the fat mixture 4, wherein the same recipe was used from Table 10, as described above.

The preparation of the filling was performed in the same manner as for comparative example 8.

The pastry fillings of comparative example 8, example 9, comparative example 10 and example 11 were evaluated in comparison to each other by a test panel after 1 week by comparing a number of parameters for these fillings and awarding them a score of 0 to 5, where 0 means that the respective property is completely absent from the filling while 5 means that the property is strongly present in the filling. The results can be found in Table 11 below.

**Table 11**

| *Taste evaluation of the pastry fillings* | | | | |
|---|---|---|---|---|
| | **Comparative example 8** | **Example 9** | **Comparative example 10** | **Example 11** |
| Grainy | 0.0 | 0.0 | 0.0 | 0.0 |
| Creamy | 3.3 | 3.8 | 2.0 | 3.5 |
| Readily melting | 3.8 | 4.0 | 2.1 | 4.0 |
| Cool melting | 1.5 | 1.7 | 0.1 | 1.7 |
| Hardness | 2.7 | 2.1 | 4.5 | 2.6 |
| Stickiness | 0.0 | 0.0 | 1.0 | 0.1 |
| Waxiness | 0.0 | 0,0 | 1.5 | 0.0 |
| Proximity to Reference (0 = far ; 5 = very close) | | 2.0 | 0.0 | 5.0 |

This evaluation shows that after 1 week, both example filling 9 and 11 score well, with a certain preference for 11. Comparative example 10, prepared with a combination of fats known from the literature, scores markedly lower on all counts. The filling melts slowly in the mouth, without cooling effect, and as it lingers in the mouth for a long time, it is experienced as "waxy". It is in no way a full-fledged alternative to hardened coconut oil (i.e. reference fat composition (REF 2)).

Example filling 9 and example filling 11 were stored for a longer time in an incubator at 20°C. At regular intervals, the fillings were visually inspected. Within 6 weeks, example filling 9 showed signs of recrystallization on its surface, which makes the filling less suited to be used in visible places in the end product. Example filling 11, however, after 6 weeks showed no trace of recrystallization. When tasting the example filling 9, after 6 weeks of storage, it did not feel grainy or sandy.

The addition of 10 wt.% transesterified palm oil in fat mixture 4 with regard to fat mixture 3, at the expense of 10% palm mid fraction, thus results in an improvement in stability, namely, no recrystallization at the surface, without this being at the expense of the cool melting property. The difference between both samples is mainly visually observable.

## Claims

1. A glyceride composition comprising at least one stearin fraction of a lauric fat component and at least one fractioned non-lauric fat component, wherein the glyceride composition contains, relative to the weight of the glyceride composition,
a) C16 saturated fatty acid residues (C16:0), C18 saturated fatty acid residues (C18:0) and C12 saturated fatty acid residues (C12:0) in a weight ratio of (C16:0 + C18:0) / (C12:0) of more than 0.7,
b) triglycerides having a total chain length, expressed in carbon number, of respectively 42 carbon atoms (C42), 44 carbon atoms (C44) and 46 carbon atoms (C46), wherein the sum C42 + C44 + C46 is less than 20,
c) 60 to 85 wt. % of saturated fatty acid residues (SAFA),
d) less than 18 ppm of saturated hydrocarbons originating from mineral oil with a chain length of more than ten carbon atoms (>C10) and equal to or less than 50 carbon atoms (≤ C50) (hereafter MOSH content),
wherein the glyceride composition has
a solid fat content (SFC) at 35°C of less than 5 wt. % and an SFC at 40°C of less than 1 wt. % wherein the SFC value is measured according to the standard IUPAC (International Union of Pure and Applied Chemistry) 2.150 a method.

2. The glyceride composition according to claim 1, wherein the weight ratio of (C16:0 + C18:0) / (C12:0) is more than 0.8, preferably more than 0.9, and more preferably more than 1.0.

3. The glyceride composition according to claim 1 or 2, wherein the sum C42 + C44 + C46 is less than 15, preferably less than 10.

4. The glyceride composition according to any of claims 1-3, wherein the SAFA content is from 65 to 80 wt. %.

5. The glyceride composition according to any of claims 1-4, wherein the MOSH content is less than 15 ppm, preferably less than 12 ppm, more preferably less than 10 ppm.

6. The glyceride composition according to any of claims 1-5, wherein the solid fat content (SFC) at 35°C is less than 3 wt. %, preferably less than 1 wt. %.

7. The glyceride composition according to any of claims 1-6, in which the difference between SFC at 20°C (SFC 20°C) and at 30°C (SFC 30°C), (SFC 20°C - SFC 30°C), is at least 30 wt. %, preferably at least 35 wt. %, more preferably 40 wt. %.

8. The glyceride composition according to any of claims 1-7, wherein the glyceride composition contains, relative to the weight of the glyceride composition, between 18 and 40 wt. %, preferably between 20 and 37 wt. % of C-12 fatty acid residues.

9. The glyceride composition according to any of claims 1-8, wherein the glyceride composition contains less than 2.5 ppm of (unsaturated) aromatic hydrocarbons originating from mineral oil with a chain length of more than ten carbon atoms (>C10) and equal to or less than 50 carbon atoms (≤ C50) (hereafter MOAH content), preferably less than 2.0 ppm, more preferably less than 1.5 ppm, and most preferably less than 1.0 ppm, relative to the weight of the glyceride composition.

10. The glyceride composition according to any of claims 1-9, wherein the glyceride composition contains less than 1.0 ppm of 3-monochloropropane-1,2-diol (hereafter 3-MCPD content), preferably less than 0.8 ppm, more preferably less than 0.7 ppm, relative to the weight of the glyceride composition.

11. The glyceride composition according to any of claims 1-10, wherein the glyceride composition contains, relative to the weight of the glyceride composition,
a) 30 to 70 wt. % of at least one stearin fraction of a lauric fat component, preferably from 35 to 65 wt. %, more preferably from 40 to 60 wt. %, and
b) 70 to 30 wt. % of at least one fractioned non-lauric fat component, preferably from 65 to 35 wt. %, more preferably from 60 to 40 wt. %.

12. The glyceride composition according to claim 11, wherein the glyceride composition contains, relative to the weight of the glyceride composition, at least 10 wt. %, preferably at least 20 wt. %, of at least one fractioned non-lauric fat component, wherein said fractioned non-lauric fat component is **characterized by** an amount of SSS triglycerides of at most 10 wt. %, preferably at most 8 wt. %, more preferably at most 5 wt. %, based on the total weight of the triglyceride composition of said fractioned non-lauric fat component.

13. The glyceride composition according to claim 11 or 12, wherein the at least one fractioned non-lauric fat component is **characterized by** an amount of S2U triglycerides of at least 60 wt. %, preferably between 70 and 95 wt. %.

14. The glyceride composition according to any of claims 11 - 13, wherein the glyceride composition comprises at least one fractioned non-lauric fat component selected from the group consisting of fractioned palm fat, fractioned shea butter, fractioned mango fat or fractioned sal fat.

15. The glyceride composition according to any of claims 1 - 14, wherein the glyceride composition comprises at least one stearin fraction of a lauric fat component, wherein het lauric fat is selected from the group consisting of palm kernel oil, coconut oil, babassu oil or a combination of several of these.

16. The glyceride composition according to any of claims 1-15, wherein the glyceride composition is substantially free of hardened fat components.

17. The glyceride composition according to any of claims 1-16, wherein the glyceride composition is substantially free of transesterified fat components.

18. A method for producing the glyceride composition according to any of claims 1-17, **characterized in that** the method comprises the steps of mixing:
a) 30 to 70 wt. %, preferably from 35 to 65 wt. %, more preferably from 40 to 60 wt. %, of at least one stearin fraction of a lauric fat component, which is preferably at least partly in molten form, and
b) 70 to 30 wt. %, preferably from 65 to 35 wt. %, more preferably from 60 to 40 wt. %, of at least one fractioned non-lauric fat component, which is preferably at least partly in molten form, and

19. The method according to claim 18, **characterized in that** the method comprises the further step of mixing less than 20 wt.% of at least one liquid oil.

20. The glyceride composition according to any of claims 1-10, wherein the glyceride composition further comprises, relative to the weight of the glyceride composition, at least 5 wt. % and at most 25 wt. %, preferably between 8 and 20 wt. %, of a transesterified fat component, wherein this fat component is optionally fractioned after transesterification.

21. The glyceride composition according to claim 20, wherein the transesterified fat component consists for at least 80 wt. %, more preferably for at least 90 wt. %, more preferably for 100 wt. %, of non-lauric fats, preferably selected from the group of palm oil, shea butter, sal fat or mango fat or fractions of these fats or combinations of these fats.

22. The glyceride composition according to claim 18, 19 or 20, wherein the transesterified component consists of transesterified palm oil or a fraction thereof, or a palm oil fraction which is transesterified, and wherein this transesterified palm oil fraction if optionally fractioned again afterwards, or combinations of these fats.

23. The method according to claim 18, **characterized in that** the method comprises the further step of mixing 5 to 25 wt.%, preferably from 8 to 20 wt.%, of at least one transesterified fat component, thereby producing the glyceride composition according to any of claims 20-22.

24. The use of the glyceride composition according to any of claims 1-17 or 20-22 for the production of edible products.

25. An edible product, wherein said edible product comprises, relative to the total weight of the edible product,
a) 15 to 95 wt. % of a glyceride composition, preferably from 20 to 60 wt. %, more preferably from 25 to 50 wt. %, wherein the glyceride composition is a glyceride composition according to any of claims 1-17 or 20-22, and
b) 5 to 85 wt. % of a dry matter, preferably from 40 to 80 wt. %, more preferably from 50 to 75 wt. %,
c) at most 25 wt. % water, preferably at most 15 wt. %, more preferably at most 8 wt.%.

26. The edible product according to claim 25, wherein the edible product is selected from the group consisting of pastry fillings, pastry creams, whitener products, couvertures, toffees, ice cream, whipped cream.

## Patentansprüche

1. Eine Glyceridzusammensetzung, welche zumindest eine Stearinfraktion einer laurischen Fettkomponente und zumindest eine fraktionierte nichtlaurischen Fettkomponente umfasst, wobei die Glyceridzusammensetzung, in Bezug zum Gewicht der Glyceridzusammensetzung, Folgendes enthält:
a) C16-gesättigte Fettsäurereste (C16:0), C18-gesättigte Fettsäurereste (C18:0) und C12-gesättigte Fettsäurereste (C12:0) in einem Gewichtsverhältnis von (C16:0 + C18:0) / (C12:0) von mehr als 0,7,
b) Triglyceride mit einer Gesamtkettenlänge, ausgedrückt in Kohlenstoffzahl, von respektive 42 Kohlenstoffatomen (C42), 44 Kohlenstoffatomen (C44) und 46 Kohlenstoffatomen (C46), wobei die Summe C42 + C44 + C46 weniger als 20 beträgt,
c) 60 bis 85 Gew.-% gesättigte Fettsäurereste (SAFA),
d) weniger als 18ppm gesättigte Kohlenwasserstoffe stammend von Mineralöl mit einer Kettenlänge von mehr als zehn Kohlenstoffatomen (> C10) und gleich viel wie oder weniger als 50 Kohlenstoffatomen (≤ C50) (nachstehend MOSH-Gehalt),
wobei die Glyceridzusammensetzung
einen Festfettgehalt (SFC) bei 35 °C von weniger als 5 Gew.-% und einen SFC bei 40 °C von weniger als 1 Gew.-% hat, wobei der SFC-Wert nach dem Standardverfahren 2.150 a der IUPAC (International Union of Pure and Applied Chemistry) gemessen wird.

2. Die Glyceridzusammensetzung nach Anspruch 1, wobei das Gewichtsverhältnis von (C16:0 + C18:0) / (C12:0) mehr als 0,8 beträgt, bevorzugt mehr als 0,9 und noch besser mehr als 1,0.

3. Die Glyceridzusammensetzung nach Anspruch 1 oder 2, wobei die Summe C42 + C44 + C46 weniger als 15 ist, bevorzugt weniger als 10.

4. Die Glyceridzusammensetzung nach irgendeinem der Ansprüche 1 bis 3, wobei der SAFA-Gehalt von 65 bis 80 Gew.-% beträgt.

5. Die Glyceridzusammensetzung nach irgendeinem der Ansprüche 1 bis 4, wobei der MOSH-Gehalt weniger als 15 ppm beträgt, bevorzugt weniger als 12 ppm, noch besser weniger als 10 ppm.

6. Die Glyceridzusammensetzung nach irgendeinem der Ansprüche 1 bis 5, wobei der Festfettgehalt (SFC) bei 35 °C weniger als 3 Gew.-% beträgt, bevorzugt weniger als 1 Gew.-%.

7. Die Glyceridzusammensetzung nach irgendeinem der Ansprüche 1 bis 6, wobei der Unterschied zwischen dem SFC bei 20 °C (SFC 20 °C) und bei 30 °C (SFC 30 °C), (SFC 20 °C - SFC 30 °C), mindestens 30 Gew.-%, bevorzugt mindestens 35 Gew.-%, noch besser 40 Gew.-% beträgt.

8. Die Glyceridzusammensetzung nach irgendeinem der Ansprüche 1 bis 7, wobei die Glyceridzusammensetzung, in Bezug zum Gewicht der Glyceridzusammensetzung, zwischen 18 und 40 Gew.-%, bevorzugt zwischen 20 und 37 Gew.-% C-12-Fettsäurereste enthält.

9. Die Glyceridzusammensetzung nach irgendeinem der Ansprüche 1 bis 8, wobei die Glyceridzusammensetzung weniger als 2,5 ppm (ungesättigte) aromatische Kohlenwasserstoffe stammend von Mineralöl mit einer Kettenlänge von mehr als zehn Kohlenstoffatomen (> C10) und gleich viel wie oder weniger als 50 Kohlenstoffatomen (≤ C50) (nachstehend MOAH-Gehalt), bevorzugt weniger als 2,0 ppm, noch besser weniger als 1,5 ppm, und am besten weniger als 1,0 ppm, in Bezug zum Gewicht der Glyceridzusammensetzung, enthält.

10. Die Glyceridzusammensetzung nach irgendeinem der Ansprüche 1 bis 9, wobei die Glyceridzusammensetzung weniger als 1,0 ppm 3-Monochlor-propan-1,2-diol (nachstehend 3-MCPD-Gehalt), bevorzugt weniger als 0,8 ppm, noch besser weniger als 0,7 ppm, in Bezug zum Gewicht der Glyceridzusammensetzung, enthält.

11. Die Glyceridzusammensetzung nach irgendeinem der Ansprüche 1 bis 10, wobei die Glyceridzusammensetzung, in Bezug zum Gewicht der Glyceridzusammensetzung, Folgendes enthält:
a) 30 bis 70 Gew.-% von zumindest einer Stearinfraktion einer laurischen Fettkomponente, bevorzugt von 35 bis 65 Gew.-%, noch besser von 40 bis 60 Gew.-%, und
b) 70 bis 30 Gew.-% von zumindest einer fraktionierten nichtlaurischen Fettkomponente, bevorzugt von 65 bis 35 Gew.-%, noch besser von 60 bis 40 Gew.-%.

12. Die Glyceridzusammensetzung nach Anspruch 11, wobei die Glyceridzusammensetzung, in Bezug zum Gewicht der Glyceridzusammensetzung, mindestens 10 Gew.-%, bevorzugt mindestens 20 Gew.-%, von zumindest einer fraktionierten nichtlaurischen Fettkomponente enthält, wobei die fraktionierte nichtlaurische Fettkomponente durch eine Menge von SSS-Triglyceriden von höchstens 10 Gew.-%, bevorzugt höchstens 8 Gew.-%, noch besser höchstens 5 Gew.-%, basierend auf dem Gesamtgewicht der Triglyceridzusammensetzung der nichtlaurischen Fettkomponente gekennzeichnet ist.

13. Die Glyceridzusammensetzung nach Anspruch 11 oder 12, wobei die zumindest eine fraktionierte nichtlaurische Fettkomponente durch eine Menge von S2U-Triglyceriden von mindestens 60 Gew.-%, bevorzugt zwischen 70 und 95 Gew.-%, gekennzeichnet ist.

14. Die Glyceridzusammensetzung nach irgendeinem der Ansprüche 11 bis 13, wobei die Glyceridzusammensetzung zumindest eine fraktionierte nichtlaurische Fettkomponente ausgewählt aus der Gruppe bestehend aus fraktioniertem Palmfett, fraktionierter Sheabutter, fraktioniertem Mangofett oder fraktioniertem Salfett umfasst.

15. Die Glyceridzusammensetzung nach irgendeinem der Ansprüche 1 bis 14, wobei die Glyceridzusammensetzung zumindest eine Stearinfraktion einer laurischen Fettkomponente umfasst, wobei das laurische Fett ausgewählt ist aus der Gruppe bestehend aus Palmkernöl, Kokosnussöl, Babassuöl oder einer Kombination von mehreren davon.

16. Die Glyceridzusammensetzung nach irgendeinem der Ansprüche 1 bis 15, wobei die Glyceridzusammensetzung im Wesentlichen frei von gehärteten Fettkomponenten ist.

17. Die Glyceridzusammensetzung nach irgendeinem der Ansprüche 1 bis 16, wobei die Glyceridzusammensetzung im Wesentlichen frei von umgeesterten Fettkomponenten ist.

18. Ein Verfahren zur Herstellung der Glyceridzusammensetzung nach irgendeinem der Ansprüche 1 bis 17, **dadurch gekennzeichnet, dass** das Verfahren die Schritte des Mischens der folgenden Komponenten umfasst:
a) 30 bis 70 Gew.-%, bevorzugt von 35 bis 65 Gew.-%, noch besser von 40 bis 60 Gew.-%, von zumindest einer Stearinfraktion einer laurischen Fettkomponente, die bevorzugt zumindest teilweise in geschmolzener Form vorliegt, und
b) 70 bis 30 Gew.-%, bevorzugt von 65 bis 35 Gew.-%, noch besser von 60 bis 40 Gew.-%, von zumindest einer fraktionierten nichtlaurischen Fettkomponente, die bevorzugt zumindest teilweise in geschmolzener Form vorliegt, und

19. Das Verfahren nach Anspruch 18, **dadurch gekennzeichnet, dass** das Verfahren den weiteren Schritt des Mischens von weniger als 20 Gew.-% von zumindest einem flüssigen Öl umfasst.

20. Die Glyceridzusammensetzung nach irgendeinem der Ansprüche 1 bis 10, wobei die Glyceridzusammensetzung ferner, in Bezug zum Gewicht der Glyceridzusammensetzung, mindestens 5 Gew.-% und höchstens 25 Gew.-%, bevorzugt zwischen 8 und 20 Gew.-%, einer umgeesterten Fettkomponente umfasst, wobei diese Fettkomponente optional nach Umesterung fraktioniert wird.

21. Die Glyceridzusammensetzung nach Anspruch 20, wobei die umgeesterte Fettkomponente zu mindestens 80 Gew.-%, noch besser zu mindestens 90 Gew.-%, noch besser zu 100 Gew.-%, aus nichtlaurischen Fetten besteht, bevorzugt ausgewählt aus der Gruppe von Palmöl, Sheabutter, Salfett oder Mangofett oder Fraktionen dieser Fette oder Kombinationen dieser Fette.

22. Die Glyceridzusammensetzung nach Anspruch 18, 19 oder 20, wobei die umgeesterte Komponente aus umgeestertem Palmöl oder einer Fraktion davon, oder einer Palmölfraktion, die umgeestert ist, und wobei diese umgeesterte Palmölfraktion danach optional nochmals fraktioniert wird, oder Kombinationen dieser Fette besteht.

23. Das Verfahren nach Anspruch 18, **dadurch gekennzeichnet, dass** das Verfahren den weiteren Schritt des Mischens von 5 bis 25 Gew.-%, bevorzugt von 8 bis 20 Gew.-%, von zumindest einer umgeesterten Fettkomponente umfasst, wodurch die Glyceridzusammensetzung nach irgendeinem der Ansprüche 20 bis 22 hergestellt wird.

24. Die Verwendung der Glyceridzusammensetzung nach irgendeinem der Ansprüche 1 bis 17 oder 20 bis 22 für die Herstellung von essbaren Produkten.

25. Ein essbares Produkt, wobei das essbare Produkt, in Bezug zum Gesamtgewicht des essbaren Produkts, Folgendes umfasst:
a) 15 bis 95 Gew.-% einer Glyceridzusammensetzung, bevorzugt von 20 bis 60 Gew.-%, noch besser von 25 bis 50 Gew.-%, wobei die Glyceridzusammensetzung eine Glyceridzusammensetzung nach irgendeinem der Ansprüche 1 bis 17 oder 20 bis 22 ist, und
b) 5 bis 85 Gew.-% einer Trockenmasse, bevorzugt von 40 bis 80 Gew.-%, noch besser von 50 bis 75 Gew.-%,
c) höchstens 25 Gew.-% Wasser, bevorzugt höchstens 15 Gew.-%, noch besser höchstens 8 Gew.-%.

26. Das essbare Produkt nach Anspruch 25, wobei das essbare Produkt ausgewählt ist aus der Gruppe bestehend aus Gebäckfüllungen, Gebäckcremes, Weißerprodukten, Kuvertüren, Toffees, Eiscreme, Schlagsahne.

## Revendications

1. Composition de glycéride comprenant au moins une fraction de stéarine d'un composant de graisse laurique et au moins un composant de graisse non laurique fractionné, dans laquelle la composition de glycéride contient, par rapport au poids de la composition de glycéride,
a) des résidus d'acides gras saturés C16 (C16:0), des résidus d'acides gras saturés C18 (C18:0) et des résidus d'acides gras saturés C12 (C12:0) dans un rapport pondéral de (C16:0 + C18:0) / (C12:0) supérieur à 0,7,
b) des triglycérides présentant une longueur de chaîne totale, exprimée en nombre de carbones, de respectivement 42 atomes de carbone (C42), 44 atomes de carbone (C44) et 46 atomes de carbone (C46), dans laquelle la somme C42 + C44 + C46 étant inférieure à 20,
c) 60 à 85 % en poids de résidus d'acides gras saturés (SAFA),
d) moins de 18 ppm d'hydrocarbures saturés provenant d'huile minérale avec une longueur de chaîne supérieure à dix atomes de carbone (>C10) et égale ou inférieure à 50 atomes de carbone (≤ C50) (ci-après teneur en MOSH),
dans laquelle la composition de glycéride a
une teneur en graisses solides (SFC) à 35 °C inférieure à 5 % en poids et une SFC à 40 °C inférieure à 1 % en poids, dans laquelle la valeur SFC est mesurée selon la méthode standard IUPAC (Union Internationale de Chimie Pure et Appliquée) 2.150 a.

2. Composition de glycéride selon la revendication 1, dans laquelle le rapport pondéral de (C16:0 + C18:0)/(C12:0) est supérieur à 0,8, de préférence supérieur à 0,9, et plus préférentiellement supérieur à 1,0.

3. Composition de glycéride selon la revendication 1 ou 2, dans laquelle la somme C42 + C44 + C46 est inférieure à 15, de préférence inférieure à 10.

4. Composition de glycéride selon l'une quelconque des revendications 1-3, dans laquelle la teneur en SAFA est de 65 à 80 % en poids.

5. Composition de glycéride selon l'une quelconque des revendications 1-4, dans laquelle la teneur en MOSH est inférieure à 15 ppm, de préférence inférieure à 12 ppm, plus préférentiellement inférieure à 10 ppm.

6. Composition de glycéride selon l'une quelconque des revendications 1-5, dans laquelle la teneur en graisses solides (SFC) à 35 °C est inférieure à 3 % en poids, de préférence inférieure à 1 % en poids.

7. Composition de glycéride selon l'une quelconque des revendications 1-6, dans laquelle la différence entre la SFC à 20 °C (SFC 20 °C) et à 30 °C (SFC 30 °C), (SFC 20 °C - SFC 30 °C), est d'au moins 30 % en poids, de préférence au moins 35 % en poids, plus préférentiellement 40 % en poids.

8. Composition de glycéride selon l'une quelconque des revendications 1-7, dans laquelle la composition de glycéride contient, par rapport au poids de la composition de glycéride, entre 18 et 40 % en poids, de préférence entre 20 et 37 % en poids de résidus d'acides gras C-12.

9. Composition de glycéride selon l'une quelconque des revendications 1-8, dans laquelle la composition de glycéride contient moins de 2,5 ppm d'hydrocarbures aromatiques (insaturés) provenant d'huile minérale avec une longueur de chaîne de plus de dix atomes de carbone (>C10) et égale à ou inférieure à 50 atomes de carbone (≤ C50) (ci-après teneur en MOAH), de préférence moins de 2,0 ppm, plus préférentiellement moins de 1,5 ppm, et le plus préférentiellement de 1,0 ppm, par rapport au poids de la composition de glycéride.

10. Composition de glycéride selon l'une quelconque des revendications 1-9, dans laquelle la composition de glycéride contient moins de 1,0 ppm de 3-monochloropropane-1,2-diol (ci-après teneur en 3-MCPD), de préférence moins de 0,8 ppm, plus préférentiellement moins de 0,7 ppm, par rapport au poids de la composition de glycéride.

11. Composition de glycéride selon l'une quelconque des revendications 1-10, dans laquelle la composition de glycéride contient, par rapport au poids de la composition de glycéride,
a) 30 à 70 % en poids d'au moins une fraction de stéarine d'un composant de graisse laurique, de préférence de 35 à 65 % en poids, plus préférentiellement de 40 à 60 % en poids, et
b) 70 à 30% en poids d'au moins un composant de graisse non laurique fractionné, de préférence de 65 à 35 % en poids, plus préférentiellement de 60 à 40 % en poids.

12. Composition de glycéride selon la revendication 11, dans laquelle la composition de glycéride contient, par rapport au poids de la composition de glycéride, au moins 10 % en poids, de préférence au moins 20 % en poids, d'au moins un composant de graisse non laurique fractionné, dans laquelle ledit composant de graissse non laurique fractionné est **caractérisé par** une quantité de triglycérides SSS d'au plus 10 % en poids, de préférence au plus 8 % en poids, plus préférentiellement au plus 5 % en poids, sur la base du poids total de la composition de triglycéride dudit composant de graisse non laurique fractionné.

13. Composition de glycéride selon la revendication 11 ou 12, dans laquelle l'au moins un composant de graisse non laurique fractionné est **caractérisé par** une quantité de triglycérides S2U d'au moins 60 % en poids, de préférence entre 70 et 95 % en poids.

14. Composition de glycéride selon l'une quelconque des revendications 11-13, dans laquelle la composition de glycéride comprend au moins un composant de graisse non laurique fractionné sélectionné dans le groupe constitué de graisse de palme fractionnée, beurre de karité fractionné, graisse de mangue fractionnée ou graisse de sal fractionnée.

15. Composition de glycéride selon l'une quelconque des revendications 1-14, dans laquelle la composition de glycéride comprend au moins une fraction de stéarine d'un composant de graisse laurique, dans laquelle la graisse laurique est sélectionnée à dans le groupe constitué d'huile de palmiste, huile de noix de coco, huile de babassu ou une combinaison de plusieurs de ceux-ci.

16. Composition de glycéride selon l'une quelconque des revendications 1-15, dans laquelle la composition de glycéride est sensiblement exempte de composants de graisses durcies.

17. Composition de glycéride selon l'une quelconque des revendications 1-16, dans laquelle la composition de glycéride est sensiblement exempte de composants de graisses transestérifiées.

18. Procédé de production de la composition de glycéride selon l'une quelconque des revendications 1-17, **caractérisé en ce que** le procédé comprend les étapes de mélange de :
a) 30 à 70 % en poids, de préférence de 35 à 65 % en poids, plus préférentiellement de 40 à 60% en poids, d'au moins une fraction de stéarine d'un composant gras laurique, qui est de préférence au moins partiellement sous forme fondue, et
b) 70 à 30 % en poids, de préférence de 65 à 35 % en poids, plus préférentiellement de 60 à 40 % en poids, d'au moins un composant de graisse non laurique fractionné, qui est de préférence au moins partiellement sous forme fondue, et

19. Procédé selon la revendication 18, **caractérisé en ce que** le procédé comprend l'étape supplémentaire de mélange de moins de 20 % en poids d'au moins une huile liquide.

20. Composition de glycéride selon l'une quelconque des revendications 1-10, dans laquelle la composition de glycéride comprend en outre, par rapport au poids de la composition de glycéride, au moins 5 % en poids et au plus 25 % en poids, de préférence entre 8 et 20 % en poids, d'un composant gras transestérifié, dans laquelle ce composant gras est facultativement fractionné après la transestérification.

21. Composition de glycéride selon la revendication 20, dans laquelle le composant gras transestérifié consiste pour au moins 80 % en poids, plus préférentiellement pour au moins 90% en poids, plus préférentiellement pour 100% en poids de graisses non lauriques, de préférence sélectionnées à partir du groupe constitué d'huile de palme, de beurre de karité, de graisse de sal ou de graisse de mangue ou de fractions de ces graisses ou combinaisons de ces graisses.

22. Composition de glycéride selon la revendication 18, 19 ou 20, dans laquelle le composant transestérifié consiste en de l'huile de palme transestérifiée ou une fraction de celle-ci, ou une fraction d'huile de palme qui est transestérifiée, et dans laquelle cette fraction d'huile de palme transestérifiée est facultativement à nouveau fractionnée ensuite, ou des combinaisons de ces graisses.

23. Procédé selon la revendication 18, **caractérisé en ce que** le procédé comprend l'étape supplémentaire de mélange de 5 à 25 % en poids, de préférence de 8 à 20 % en poids, d'au moins un composant gras transestérifié, produisant ainsi la composition de glycéride selon l'une quelconque des revendications 20-22.

24. Utilisation de la composition de glycéride selon l'une quelconque des revendications 1-17 ou 20-22 pour la production de produits comestibles.

25. Produit comestible, dans lequel ledit produit comestible comprend, par rapport au poids total du produit comestible,
a) 15 à 95 % en poids d'une composition de glycéride, de préférence de 20 à 60 % en poids, plus préférablement de 25 à 50 % en poids, dans lequel la composition de glycéride est une composition de glycéride selon l'une quelconque des revendications 1-17 ou 20-22, et
b) 5 à 85 % en poids d'une matière sèche, de préférence de 40 à 80 % en poids, plus préférentiellement de 50 à 75 % en poids,
c) au plus 25 % en poids d'eau, de préférence au plus 15 % en poids, plus préférentiellement au plus 8 % en poids.

26. Produit comestible selon la revendication 25, dans lequel le produit comestible est sélectionné dans le groupe constitué de fourrages pâtissiers, crèmes pâtissières, produits blanchisseurs, couvertures, caramels, crème glacée, crème fouettée.
